# EUROPÄISCHE PATENTSCHRIFT

(11) **EP 3 566 933 B1**
(45) Veröffentlichungstag und Bekanntmachung des Hinweises auf die Patenterteilung: **26.03.2025**
(21) Anmeldenummer: 19173622.2
(22) Anmeldetag: 09.05.2019
(51) Int. Cl.: B62H 5/00, B62H 5/14, E05B 71/00

(54) **GLIEDERKETTE UND RAHMENSCHLOSSSYSTEM FÜR EIN ZWEIRAD**
LINK CHAIN AND FRAME LOCK SYSTEM FOR A TWO-WHEEL VEHICLE
CHAÎNE DE LIAISON ET SYSTÈME DE VERROUILLAGE DU CADRE POUR UN VÉHICULE À DEUX ROUES

(30) Priorität: 11.05.2018 DE 102018111311
(43) Veröffentlichungstag der Anmeldung: 13.11.2019
(73) Patentinhaber: ABUS August Bremicker Söhne KG, 58300 Wetter-Volmarstein (DE)
(72) Erfinder:
(74) Vertreter: Manitz Finsterwald Patent- und Rechtsanwaltspartnerschaft mbB

(56) Entgegenhaltungen:
- EP-A1- 1 834 864
- EP-A1- 3 069 968
- WO-A1-2018/080622
- DE-U1- 202016 101 782
- US-A- 5 899 099

## Beschreibung

Die vorliegende Erfindung betrifft eine Gliederkette gemäß dem Oberbegriff des Anspruchs 1 zur Sicherung eines Zweirads, wie sie beispielsweise aus der der EP 1 834 864 A1 bekannt geworden ist.

Ferner beschreibt die DE 20 2016 101 782 U1 ein Rahmenschlosssystem für ein Zweirad mit einem Rahmenschloss mit einem Schließriegel, der zwischen einer Schließstellung zur Blockierung eines Speichenrads eines Zweirads und einer Freigabestellung zur Freigabe eines Speichenrads bewegbar ist, wobei das Rahmenschloss ferner eine Klobenaufnahme zum Aufnehmen des freien Endes eines Klobens aufweist.

Ferner sind Rahmenschlosssysteme bekannt, bei denen der Schließriegel nicht als ein auf einer Kreisbahn beweglicher Rundbügel beispielweise gemäß der DE 102 52 080 A1, sondern als ein um eine Achse zwischen einer Schließstellung und einer Freigabestellung verschwenkbarer Riegelstab ausgebildet ist, siehe hierzu beispielweise die DE 103 58 300 A1.

Derartige Rahmenschlosssysteme können über eine Glieder- und insbesondere eine Rundgliederkette verfügen, mittels derer sich ein zu sicherndes Zweirad zusätzlich an einem Befestigungsobjekt wie beispielsweise einem Laternenpfosten sichern lässt, um es gegen Diebstahl zu sichern. Hierzu lässt sich mittels der Gliederkette eine Kettenschlaufe bilden, die das Befestigungsobjekt umgibt, indem der Kloben der Kette durch ein Durchfädelelement wie beispielweise einen Ring oder eine Schlaufe gemäß der DE 103 58 300 A1 am anderen Kettenende hindurchgeführt wird, wobei anschließend das freie Ende des Klobens, der an dem ersten Kettenglied am ersten bzw. freien Ende der Gliederkette befestigt ist bzw. mit diesem in Eingriff steht, in die Klobenaufnahme des Rahmenschlosses eingeführt und darin mittels des Schlossmechanismus gesichert werden kann.

Um das mittels der Gliederkette zu sichernde Zweirad und insbesondere dessen Rahmen vor Beschädigungen und Lackabplatzern durch die verhältnismäßig massiv ausgebildete Kette sowie deren Kloben zu schützen, sind dabei üblicherweise nicht nur die Gliederkette beziehungsweise deren Kettenglieder durch einen Schutzmantel oder -schlauch umgeben; vielmehr ist häufig auch das dem freien Ende des Klobens gegenüberliegende Griffende desselben einschließlich des ersten Kettenglieds von einer im Wesentlichen holzylindrischen Schutzhülse aus einem relativ steifen Kunststoffmaterial umgeben, um so ungewollten Beschädigungen eines zu sichernden Zweirads durch den Kloben zuvorzukommen.

Aufgrund der Tatsache, dass die Schutzhülse nicht nur den Griffabschnitt sondern auch das erste Kettenglied der Gliederkette umgibt, wird jedoch das erste Kettenglied durch die Schutzhülse im Wesentlichen in axialer Verlängerung des Klobens gehalten, und zwar auch dann, wenn dieser beziehungsweise das freie Ende des Klobens in der Klobenaufnahme des Rahmenschlosses gesichert ist. Das erste Kettenglied steht somit um ein gewisses Maß seitlich von dem Zweirad ab und stellt folglich ein gewisses Hindernis für den Fahrer des Zweirads dar. Insbesondere kann der Fahrer des Zweirads mit seinen Fersen beziehungsweise Schuhabsätzen während der Fahrt mit dem abstehenden ersten Kettenglied kollidieren, da sich dasselbe auch in der Freigabestellung des Schließriegels in der Klobenaufnahme sichern lässt.

Davon abgesehen stellt das seitlich von dem Zweirad abstehende erste Kettenglied auch dann ein gewisses Hindernis dar, wenn das Zweirad mittels der Kette an einem Befestigungsobjekt gesichert ist, da in diesem Falle der Fahrer des Zweirads gerade bei beengten Platzverhältnissen an dem ersten Kettenglied hängenbleiben kann.

Der Erfindung liegt daher die Aufgabe zugrunde, eine Lösung für die zuvor beschriebene Problematik anzugeben, ohne dass dies zu Lasten der Schutzfunktion der Schutzhülse geht.

Gemäß einem ersten Aspekt wird diese Aufgabe durch eine Gliederkette mit den Merkmalen des Anspruchs 1 und insbesondere dadurch gelöst, dass an dem Griffabschnitt des Klobens eine den Griffabschnitt umgebende Schutzhülse befestigt ist, welche ein erstes Ende, das dem freien Ende des Klobens zugewandt ist, und ein von dem ersten Ende der Hülse abgewandtes zweites Ende aufweist, das der Kette zugewandt ist, wobei die Hülse zumindest einen Schlitz aufweist, der sich ausgehend von dem zweiten Hülsenende in Richtung des ersten Hülsenendes bis über die in dem Griffabschnitt des Klobens ausgebildete Öffnung erstreckt.

Durch den zumindest einen Schlitz kann die die Kette versteifende Wirkung der Hülse aufgehoben werden, derzufolge das erste Kettenglied stets im Wesentlichen in axialer Richtung mit dem Kloben gehalten wird. Vielmehr kann durch den zumindest einen Schlitz sichergestellt werden, dass sich das erste Kettenglied gegenüber dem Kloben im Wesentlichen frei bewegen und insbesondere abwinkeln kann, indem es sich ausgehend von der in dem Griffabschnitt des Klobens ausgebildeten Öffnung durch den Schlitz hindurch erstreckt.

Da sich der zumindest eine Schlitz ausgehend von dem zweiten Hülsenende in Richtung des ersten Hülsenendes bis über die in dem Griffabschnitt des Klobens ausgebildete Öffnung erstreckt, kann sich das erste Kettenglied somit in der in dem Griffabschnitt des Klobens ausgebildeten Öffnung im Wesentlichen frei bewegen, ohne hierbei an der Hülse zu reiben, wodurch sichergestellt werden kann, dass sich das erste Kettenglied je nach Ausrichtung des Klobens entweder durch den einen oder den anderen Schlitz aus der Hülse heraus erstrecken kann.

Im Folgenden wird nun auf bevorzugte Ausführungsformen der Gliederkette eingegangen. Weitere Ausführungsformen können sich auch aus den abhängigen Ansprüchen, der Figurenbeschreibung sowie den Zeichnungen ergeben.

So kann es gemäß einer Ausführungsform vorgesehen sein, dass die Hülse zwei einander gegenüberliegende Schlitze aufweist, die sich ausgehend von dem zweiten Hülsenende in Richtung des ersten Hülsenendes erstrecken. Das erste Kettenglied kann somit gegenüber dem Kloben in unterschiedlichen Richtungen abgewinkelt werden. Dies wiederum ermöglicht es, dass das freie Ende des Klobens beliebig ausgerichtet in die Klobenaufnahme des Rahmenschlosses eingeführt und darin gesichert werden kann, da die Kette anschließend schwerkraftbedingt den Kloben in eine Stellung dreht, in der die beiden Schlitze im Wesentlichen vertikal übereinander zu liegen kommen, so dass sich das erste Kettenglied durch den unteren der beiden Schlitze aus der Hülse heraus erstrecken kann.

Gemäß noch einer weiteren Ausführungsform kann es vorgesehen sein, dass der zumindest eine Schlitz eine lichte Weite aufweist, die im Wesentlichen der Nenndicke des ersten Kettenglieds entspricht. Auch hierdurch kann sichergestellt werden, dass sich das erste Kettenglied gegenüber dem Kloben frei bewegen kann, wie dies wünschenswert ist, damit das erste Kettenglied gegenüber dem Kloben abgewinkelt werden kann.

Gemäß noch einer weiteren Ausführungsform kann es vorgesehen sein, dass sich die Schutzhülse über die gesamte Länge des Griffabschnitts des Klobens erstreckt. Der Kloben weist somit im Bereich seines Griffabschnitts gewissermaßen eine Art Polsterung auf, durch die in der gewünschten Weise verhindert werden kann, dass es zu Beschädigungen des Zweirads kommt, wenn der Kloben mit seinem Griffabschnitt beispielsweise gegen den Rahmen des Zweirads prallt.

Gemäß einem zweiten Aspekt bezieht sich die Erfindung auf ein Rahmenschlosssystem mit einer Gliederkette der erläuterten Art.

Im Folgenden wird die Erfindung nun rein exemplarisch unter Bezugnahme auf die Zeichnungen beschrieben, in denen:
- Fig. 1a und 1b: eine Ausführungsform eines Rahmenschlosssystems zeigt, wobei der als Rundbügel ausgebildete Schließriegel sich in der Schließstellung beziehungsweise in der Freigabestellung befindet;
- Fig. 2: das erste Ende einer erfindungsgemäßen Rundgliederkette im Längsschnitt zeigt;
- Fig. 3: den Kloben am ersten Ende der Gliederkette gemäß Fig. 1 in einer Seitenansicht zeigt; und
- Fig. 4: eine Seitenansicht der in der Fig. 2 erkennbaren Hülse zeigt.

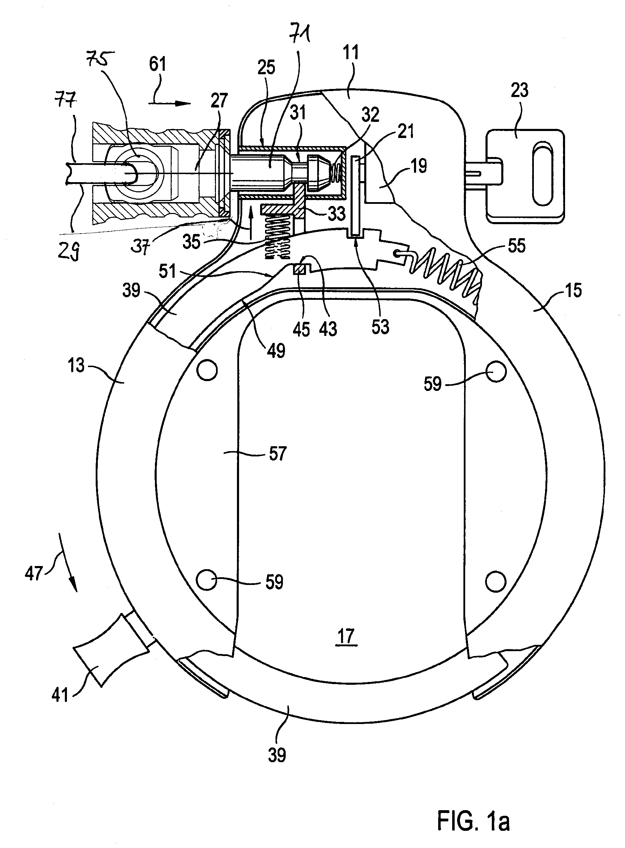

Fig. 1a zeigt in einer teilweise aufgebrochenen Vorderansicht den prinzipiellen Aufbau einer beispielhaften Ausführungsform eines Rahmenschlosses. Dieses Rahmenschloss wird beispielsweise an die Hintergabel eines Fahrrads (in den Figuren nicht gezeigt) montiert. Dort ermöglicht das Rahmenschloss ein Blockieren des hinteren Speichenrads dieses Fahrrads, um eine unbefugte Fahrt mit dem Fahrrad zu verhindern.

Das Rahmenschloss besitzt ein Gehäuse mit einem Basisabschnitt 11, an den sich ein Lagerschenkel 13 und ein Aufnahmeschenkel 15 des Gehäuses anschließen. Der Lagerschenkel 13 und der Aufnahmeschenkel 15 bilden gemeinsam im Wesentlichen eine Hufeisenform, und sie umschließen einen Schließbereich 17 des Rahmenschlosses. In diesen ragt ein Teil des Hinterrads hinein, falls das Rahmenschloss - wie erläutert - an der Hintergabel eines Fahrrads montiert ist.

Innerhalb des Basisabschnitts 11 ist ein Schließzylinder 19 angeordnet, der mit einem hier als Bügelriegel ausgebildeten Schließriegel 21 gekoppelt ist. Der Schließzylinder 19 und somit der Schließriegel 21 können mittels eines Schlüssels 23 betätigt werden.

Ferner ist innerhalb des Basisabschnitts 11 eine im Wesentlichen hohlzylindrische Klobenaufnahme 25 ausgebildet. In diese ragt das freie Ende 71 eines Klobens 27 einer Gliederkette 29 ein, der an seinem freien Ende 71 mit einer Ringnut 31 versehen ist. Das Stirnende des freien Endes 71 des Klobens 27 liegt an einer Auswurffeder 32 an, die an der Stirnseite der Klobenaufnahme 25 dauerhaft befestigt, beispielsweise verschweißt oder vernietet ist. Die Gliederkette 29 weist eine Vielzahl von aneinander gereihten Kettengliedern auf (nicht gezeigt), die von einem Schutzmantel oder -schlauch umgeben sein können. An ihrem dem Kloben 27 abgewandten Ende weist die Gliederkette 29 ein Durchfädelelement auf, das insbesondere starr oder flexibel sein kann, und das generell eine umfänglich geschlossene Öffnung aufweist, durch die der Kloben 27 hindurchgeführt werden kann. Das Durchfädelelement kann beispielsweise als ein Ring oder als eine Schlaufe ausgebildet sein, wie dies aus der DE 103 58 300 A1 bekannt ist. Indem das den Kloben 27 aufweisende Ende der Gliederkette 29 durch das Durchfädelelement geführt wird, kann die Gliederkette 29 wiederum eine geschlossene Kettenschlaufe bilden, die beispielsweise um ein stationäres Befestigungsobjekt (z.B. Laternenpfosten) gelegt sein kann, während der Kloben 27 an dem Rahmenschloss verriegelt ist. Hierdurch kann beispielsweise verhindert werden, dass das Zweirad, an dem das Rahmenschloss befestigt ist, unbefugt weggetragen wird.

Ein Klobenriegel 33 greift in die Klobenaufnahme 25 und dort in die Ringnut 31 des Klobens 27 ein. Der Klobenriegel 33 ist mittels einer Druckfeder 35 entlang einer Vorspannrichtung 37 vorgespannt.

Innerhalb des Lagerschenkels 13 befindet sich ein hier als Rundbügel ausgebildeter Schließriegel 39. In der in Fig. 1a gezeigten Schließstellung des Schließriegels 39 ragt ein Ende des Schließriegels 39 in den Basisabschnitt 11 hinein, und das andere Ende erstreckt sich quer durch den Schließbereich 17, so dass seine Spitze innerhalb des Aufnahmeschenkels 15 aufgenommen wird. An dem Schließriegel 39 ist eine Handhabe 41 dauerhaft befestigt, beispielsweise verschweißt. Die Handhabe 41 ragt durch einen seitlichen Führungsschlitz (in den Figuren nicht ersichtlich) aus dem Lagerschenkel 13 heraus.

An dem sich entlang des Basisabschnitts 11 erstreckenden Ende des Schließriegels 39, und zwar an der Innenseite des Schließriegels 39, ist eine Freigabeausnehmung 43 ausgebildet. An dieser Freigabeausnehmung 43 liegt ein Kopplungshaken 45 des Klobenriegels 33 an. Bezüglich einer Schließrichtung 47 benachbart zu der Freigabeausnehmung 43 weist der Schließriegels 39 eine Rückhalteerhöhung 49 auf, die letztlich der regulären Materialstärke des Schließriegels 39 entspricht, aber relativ zu der Freigabeausnehmung 43 bezüglich der Vorspannrichtung 37 des Klobenriegels 33 höhenversetzt ist. Der Übergang zwischen der Freigabeausnehmung 43 und der hierzu benachbarten Rückhalteerhöhung 49 bildet einen schrägen Zwangsführungsabschnitt 51.

An dem in den Basisabschnitt 11 hineinragenden Ende des Schließriegels 39 ist außerdem eine Sperrnut 53 ausgebildet, in die der Bügelriegel 21 eingreift. Ferner ist dieses Ende mit einer Zugfeder 55 verbunden, die den Schließriegel 39 entgegen der Schließrichtung 47 vorspannt.

Das gezeigte Rahmenschloss ist außerdem mit Versteifungsflächen 57 versehen. Ferner sind Verbindungsnieten 59 dargestellt, die einen oberen und einen unteren Gehäuseteil miteinander verbinden (in den Figuren nicht detailliert gezeigt).

Das in Fig. 1a gezeigte Rahmenschloss dient generell dazu, das in dem Schließbereich 17 befindliche Speichenrad wahlweise blockieren zu können, nämlich indem der Schließriegel 39 den Schließbereich 17 durchquert und somit zwischen zwei benachbarten Speichen des Speichenrads verläuft.

Um ein derartig blockiertes Speichenrad wieder freizugeben, wird der Schließriegel 39 von der in Fig. 1a gezeigten Schließstellung entgegen der Schließrichtung 47 in eine Freigabestellung bewegt. Zu diesem Zweck wird der Schließzylinder 19 mittels des Schlüssels 23 drehbetätigt. Diese Drehbetätigung wird - beispielsweise über Exzenterkopplung - in eine Schiebebewegung des Schließriegels 21 umgewandelt, so dass der Bügelriegel 21 aus der Sperrnut 23 des Schließriegels 39 herausgezogen wird. Die Zugfeder 55 zieht den somit freigegebenen Schließriegel 39 in Richtung des Aufnahmeschenkels 15, so dass der Schließriegel 39 den Schließbereich 17 freigibt.

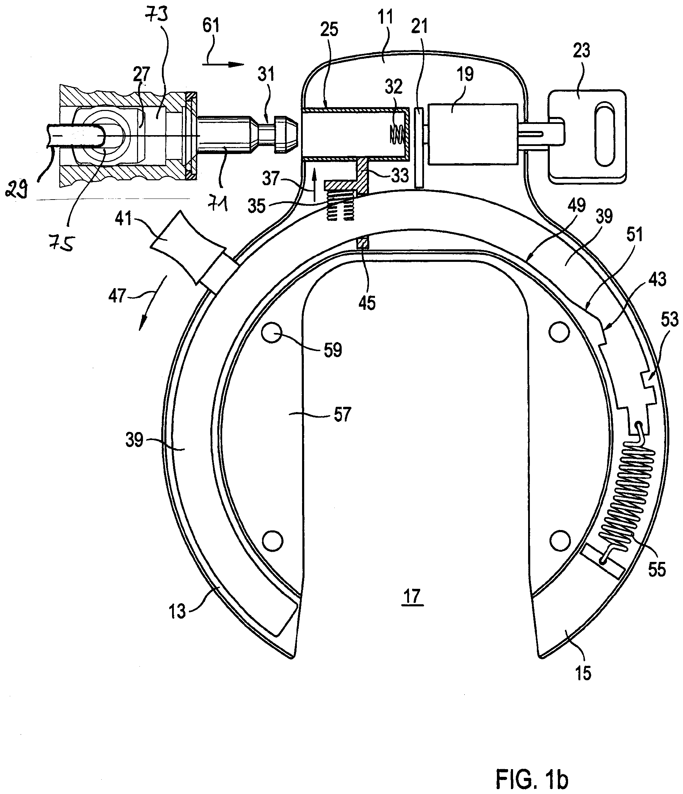

Fig. 1b zeigt in einer vollständig aufgebrochenen Vorderansicht das Rahmenschloss in der somit eingenommenen Freigabestellung des Schließriegels 39. Falls nachfolgend der Schließriegel 39 wieder in die Schließstellung überführt werden soll, wird der Schließriegel 39 mittels der Handhabe 41 entgegen der Zugkraft der Zugfeder 55 in Schließrichtung 47 bewegt. In der somit eingenommenen Schließstellung wird der Schließriegel 39 gesichert, indem der Bügelriegel 21 wieder in die Sperrnut 53 eingreift. Hierbei kann - abweichend von der vereinfachten Darstellung gemäß Fig. 1a - auch ein automatisches Einrasten des Bügelriegels 21 vorgesehen sein.

Zusätzlich zu dem erläuterten Blockieren des Schließbereichs 17 ermöglicht das in den Fig. 1a und 1b gezeigte Rahmenschloss das Sichern oder Fixieren des Klobens 27 an dem Rahmenschloss. Dadurch kann das Fahrrad mittels der Gliederkette 29 beispielsweise an einem Befestigungsobjekt, wie einem Laternenpfosten gesichert werden. Für diese zusätzliche Sicherungsfunktion wird der Kloben 27, während der Schließriegel 39 sich in der Schließstellung gemäß Fig. 1a befindet, entlang einer Einführrichtung 61 in die Klobenaufnahme 25 eingeführt. Am Ende dieses Einführvorgangs verdrängt der Kloben 27 mit seinem konischen Vorderende kurzzeitig den Klobenriegel 33 entgegen der Vorspannrichtung 37, und der Druck der Auswurffeder 32 muss überwunden werden. Sobald der Kloben 27 vollständig in die Klobenaufnahme 25 eingeführt worden ist, schnappt der Klobenriegel 33 aufgrund der von der Druckfeder 35 ausgeübten Druckkraft zurück in die Klobenaufnahme 25 und steht somit in Eingriff mit der Ringnut 31.

Der Klobenriegel 33 befindet sich nun in seiner Schließstellung, und der Kloben 27 ist innerhalb der Klobenaufnahme 25 fixiert. Dieses Eingreifen des Klobenriegels 33 in die Klobenaufnahme 25 ist deshalb möglich, weil in der Schließstellung des Schließriegels 39 der Kopplungshaken 25 des Klobenriegels 33 in die Freigabeausnehmung 43 des Schließriegels 39 eintreten kann.

Sobald der Schließriegel 39 ausgehend von der Schließstellung gemäß Fig. 1a in die Freigabestellung gemäß Fig. 1b bewegt wird, wird der Kopplungshaken 45 entlang des schrägen Zwangsführungsabschnitts 51 entgegen der Vorspannrichtung 37 zurückgezogen und nachfolgend an der Rückhalteerhöhung 49 des Schließriegels 39 in der zurückgezogenen Stellung gehalten. Dadurch gerät auch der Klobenriegel 33 außer Eingriff mit der Ringnut 31 des Klobens 27 und befindet sich somit in seiner Freigabestellung. In diesem Zustand sorgt die Auswurffeder 32 dafür, dass der Kloben 27 zumindest zu einem Teil entgegen der Einführrichtung 61 aus der Klobenaufnahme 25 gezwängt wird. Der Kloben 27 kann nun aus der Klobenaufnahme 25 entnommen werden.

Wenn nachfolgend der Schließriegel 39 ausgehend von der Freigabestellung gemäß Fig. 1b wieder zurück in die Schließstellung gemäß Fig. 1a überführt wird, gerät der Kopplungshaken 45 entlang des Zwangsführungsabschnitts 51 zurück in die Freigabeausnehmung 43, wobei die Druckfeder 35 den Klobenriegel 33 zurück in seine Schließstellung bewegt. Der Kloben 27 kann nun wieder auf die erläuterte Weise in der Klobenaufnahme 25 gesichert werden.

Somit kann der Kloben 27 nur dann in der Klobenaufnahme 25 gesichert werden, wenn auch der Schließriegel 39 vollständig geschlossen ist, wie in Fig. 1a gezeigt. Dadurch wird verhindert, dass der Benutzer des Rahmenschlosses lediglich den Kloben 27 an dem Rahmenschloss fixiert und dabei vergisst, auch den Schließriegel 39 zu schließen.

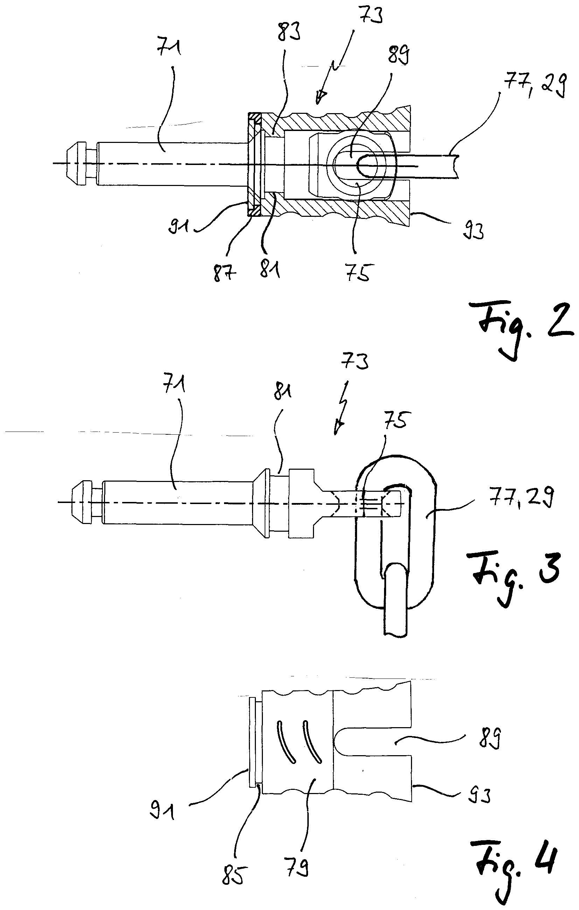

Zwar lässt sich der Kloben 27 bei dem in den Fig. 1a und 1b dargestellten Rahmenschlosssystem nur in der Schließstellung des Schließriegels 39 in der Klobenaufnahme 25 sichern; das Rahmenschlosssystem kann jedoch auch so modifiziert werden, dass sich der Kloben 27 sowohl in der Schließstellung als auch in der Freigabestellung des Schließriegels 39 in der Klobenaufnahme 25 sichern lässt, wie dies bei der Ausführungsform gemäß Fig. 2 der DE 102 52 080 A1 der Fall ist, auf die hiermit explizit Bezug genommen wird.

Im Folgenden wird nun unter Bezugnahme auf die Fig. 2 bis 4 auf die Ausgestaltung der Gliederkette 29 im Bereich ihres ersten Endes eingegangen, an dem sich der Kloben 27 befindet.

Der Kloben 27 weist entsprechend den voranstehenden Erläuterungen ein freies Ende 71 auf, welches ausgebildet ist, um von der Klobenaufnahme 25 aufgenommen und darin gesichert zu werden, wozu die Ringnut 31 dient, in die der Klobenriegel 33 in der Schließ- beziehungsweise in der Freigabestellung eingreift. An dem von dem freien Ende 71 abgewandten Ende bildet der Kloben 27 eine Griffabschnitt 73 aus, im Bereich dessen der Kloben 27 zur Einführung seines freien Endes 71 in die Klobenaufnahme 25 von einem Benutzer ergriffen werden kann. Im Bereich des Griffabschnitts 73 ist dabei eine Öffnung 75 ausgebildet, durch die sich das erste Kettenglied 77 der Gliederkette 29 hindurcherstreckt, wodurch der Kloben 27 mit dem ersten Kettenglied 77 in Eingriff steht und somit an diesem gesichert ist.

Wie der Fig. 2 ferner entnommen werden kann, ist der Griffabschnitt 73 des Klobens 27 von einer im Wesentlichen hohlzylindrischen Schutzhülse 79 aus einem dauerelastischen Kunststoffmaterial umgeben. Zur Sicherung der Schutzhülse 79 an dem Griffabschnitt 73 weist dieser eine umlaufende Ringnut 81 auf, die einen Ringvorsprung 83 aufnimmt, der entlang des Innenumfangs der Schutzhülse 79 ausgebildet ist, wodurch die Schutzhülse 79 formschlüssig an dem Griffabschnitt 73 des Klobens 27 gesichert ist. Zusätzlich kann die Schutzhülse 79 mittels eines Sicherungsrings 87 gesichert werden, welcher in eine am Außenumfang der Schutzhülse 79 ausgebildete Ringnut 85 eingepasst ist.

Besäße die Schutzhülse 79 eine geschlossene beziehungsweise unterbrechungsfrei umlaufende Wandung, so würde das erste Kettenglied 77 durch die Schutzhülse 79 stets so gehalten und ausgerichtet werden, dass es sich im Wesentlichen in axialer Ausrichtung mit dem Kloben 27 erstreckt. Um dem entgegenzuwirken beziehungsweise um zu ermöglichen, dass das erste Kettenglied 77 gegenüber dem Kloben 27 verschwenkt beziehungsweise abgewinkelt werden kann, ist es erfindungsgemäß vorgesehen, dass die Schutzhülse 79 einen und vorzugsweise zwei Schlitze 89 aufweist, die sich ausgehend von dem der Kette 29 zugewandten zweiten Ende 93 der Schutzhülse 79 in Richtung des dem freien Ende 71 des Klobens 27 zugewandten ersten Ende 91 der Schutzhülse 79 erstrecken. Das erste Kettenglied 77 kann somit durch einen der beiden Schlitze 89 hindurch geschwenkt und somit gegenüber dem Kloben 27 abgewinkelt werden (siehe Fig. 3), so dass das erste Kettenglied 77 kein seitlich von einem Zweirad abstehendes Hindernis mehr darstellt, wenn der Kloben 27 mit seinem freien Ende 71 in der Klobenaufnahme 25 eines Rahmenschlosses gesichert ist.

Wie am besten der Darstellung der Fig. 2 entnommen werden kann, erstrecken sich dabei die beiden Schlitze 89 ausgehend von dem zweiten Hülsenende 93 in Richtung des ersten Hülsenendes 91 bis über die in dem Griffabschnitt 73 des Klobens 27 ausgebildete Öffnung 75, wodurch sichergestellt werden kann, dass sich das erste Kettenglied 77 im Wesentlichen frei gegenüber dem Kloben 27 bewegen kann. Um die Bewegungsfreiheit des ersten Kettenglieds 27 weiter zu verbessern, weisen die beiden Schlitze 89 darüber hinaus eine lichte Weite auf, die im Wesentlichen der Nenndicke des ersten Kettenglieds 77 entspricht.

### Bezugszeichenliste

- 11: Basisabschnitt
- 13: Lagerschenkel
- 15: Aufnahmeschenkel
- 17: Schließbereich
- 19: Schließzylinder
- 21: Bügelriegel
- 23: Schlüssel
- 25: Klobenaufnahme
- 27: Kloben
- 29: Gliederkette
- 31: Ringnut
- 32: Auswurffeder
- 33: Klobenriegel
- 35: Druckfeder
- 37: Vorspannrichtung
- 39: Schließriegel
- 41: Handhabe
- 43: Freigabeausnehmung
- 45: Kopplungshaken
- 47: Schließrichtung
- 49: Rückhalteerhöhung
- 51: (erster) Zwangsführungsabschnitt
- 53: Sperrnut
- 55: Zugfeder
- 57: Versteifungsfläche
- 59: Verbindungsniet
- 61: Einführrichtung

- 71: freies Klobenende
- 73: Griffabschnitt
- 75: Öffnung
- 77: erstes Kettenglied
- 79: Schutzhülse
- 81: Ringnut
- 83: Ringvorsprung
- 85: Ringnut
- 87: Sicherungsring
- 89: Schlitz
- 91: 1. Hülsenende
- 93: 2. Hülsenende

## Patentansprüche

1. Gliederkette (29) zur Sicherung eines Zweirads mittels eines Rahmenschlossses,
mit mehreren Kettengliedern, wobei die Gliederkette (29) an einem ersten Ende ein erstes Kettenglied (77), das mit einem Kloben (27) in Eingriff steht, wozu das erste Kettenglied (77) durch eine Öffnung (75) hindurchgreift, die an einem von dem freien Ende (71) des Klobens (27) abgewandten Griffabschnitt (73) des Klobens (27) ausgebildet ist;
**dadurch gekennzeichnet, dass**
die Gliederkette (29) an einem von dem ersten Ende abgewandten zweiten Ende ein Durchfädelelement aufweist, das derart ausgestaltet ist, dass durch dieses der Kloben (27) zur Bildung einer Kettenschlaufe hindurchführbar ist; und dass
an dem Griffabschnitt (73) des Klobens (27) eine den Griffabschnitt (73) umgebende Schutzhülse (79) befestigt ist, welche ein erstes Ende (91), das dem freien Ende des Klobens (27) zugewandt ist, und ein von dem ersten Ende (91) der Hülse (79) abgewandtes zweites Ende (93) aufweist, wobei die Hülse (79) zumindest einen Schlitz (89) umfasst, der sich ausgehend von dem zweiten Hülsenende (93) in Richtung des ersten Hülsenendes (91) bis über die in dem Griffabschnitt (73) des Klobens (27) ausgebildete Öffnung (75) erstreckt.

2. Gliederkette nach Anspruch 1,
**dadurch gekennzeichnet, dass** die Hülse (79) zwei einander gegenüberliegenden Schlitze (89) aufweist, die sich ausgehend von dem zweiten Hülsenende (93) in Richtung des ersten Hülsenendes (91) erstrecken.

3. Gliederkette nach Anspruch 1 und/oder 2,
**dadurch gekennzeichnet, dass** der zumindest eine Schlitz (89) eine lichte Weite aufweist, die der Nenndicke des ersten Kettenglieds (77) entspricht.

4. Gliederkette nach zumindest einem der Ansprüche 1 bis 3,
**dadurch gekennzeichnet, dass** sich die Schutzhülse (79) über die gesamte Länge des Griffabschnitts (73) des Klobens (27) erstreckt.

5. Rahmenschlosssystem für ein Zweirad, umfassend:
ein Rahmenschloss mit einem Schließriegel (39), der zwischen einer Schließstellung zur Blockierung eines Speichenrads eines Zweirads und einer Freigabestellung zur Freigabe eines Speichenrads bewegbar ist; und eine Gliederkette (29);
wobei das Rahmenschloss ferner eine Klobenaufnahme (25) zum Aufnehmen des freien Endes (71) des Klobens (27) aufweist;
**dadurch gekennzeichnet, dass**
die Gliederkette (29) gemäß zumindest einem der Ansprüche 1 bis 4 ausgebildet ist.

## Claims

1. A link chain (29) for securing a two-wheeler by means of a frame lock, said link chain (29) comprising a plurality of chain links, wherein the link chain (29) has, at a first end, a first chain link (77) which is in engagement with a bolt (27), for which purpose the first chain link (77) engages through an opening (75) which is formed at a grip section (73) of the bolt (27) facing away from the free end (71) of the bolt (27),
**characterized in that**
the link chain (29) has, at a second end facing away from the first end, a thread-through element which is designed such that the bolt (27) can be guided through it to form a chain loop; and **in that**
a protective sleeve (79) surrounding the grip section (73) is fastened to the grip section (73) of the bolt (27) and has a first end (91), which faces the free end of the bolt (27), and a second end (93), which faces away from the first end (91) of the sleeve (79), wherein the sleeve (79) comprises at least one slot (89) which extends, starting from the second sleeve end (93), in the direction of the first sleeve end (91) up to and over the opening (75) formed in the grip section (73) of the bolt (27).

2. A link chain according to claim 1,
**characterized in that**
the sleeve (79) has two mutually oppositely disposed slots (89) which extend, starting from the second sleeve end (93), in the direction of the first sleeve end (91).

3. A link chain according to claim 1 and/or 2,
**characterized in that**
the at least one slot (89) has a clearance which corresponds to the nominal thickness of the first chain link (77).

4. A link chain according to at least one of the claims 1 to 3,
**characterized in that**
the protective sleeve (79) extends over the total length of the grip section (73) of the bolt (27).

5. A frame lock system for a two-wheeler, comprising:
a frame lock having a locking bolt (39) which is movable between a closing position for blocking a spoke wheel of a two-wheeler and a release position for releasing a spoke wheel; and
a link chain (29),
wherein the frame lock further has a bolt receiver (25) for receiving the free end (71) of the bolt (27),
**characterized in that**
the link chain (29) is configured in accordance with at least one of the claims 1 to 4.

## Revendications

1. Chaîne à maillons (29) pour sécuriser un deux-roues au moyen d'un antivol de cadre,
comprenant plusieurs maillons de chaîne, la chaîne à maillons (29) présentant à une première extrémité un premier maillon de chaîne (77) qui est en prise avec un gond (27), le premier maillon de chaîne (77) passant à cet effet à travers une ouverture (75) ménagée sur une partie de préhension (73) du gond (27) détournée de l'extrémité libre (71) du gond (27) ;
**caractérisée en ce que**
la chaîne à maillons (29) présente à une deuxième extrémité, détournée de la première extrémité, un élément de passage qui est conçu de telle sorte que le gond (27) peut être passé à travers celui-ci pour former une boucle de chaîne ; et **en ce que**
un manchon de protection (79) est fixé sur la partie de préhension (73) du gond (27), lequel entoure la partie de préhension (73) et présente une première extrémité (91) tournée vers l'extrémité libre du gond (27) et une deuxième extrémité (93) détournée de la première extrémité (91) du manchon (79), le manchon (79) présentant au moins une fente (89) qui s'étend depuis la deuxième extrémité de manchon (93) en direction de la première extrémité de manchon (91) jusque sur l'ouverture (75) ménagée dans la partie de préhension (73) du gond (27).

2. Chaîne à maillons selon la revendication 1,
**caractérisée en ce que**
le manchon (79) présente deux fentes (89) opposées l'une à l'autre, qui s'étendent depuis la deuxième extrémité de manchon (93) en direction de la première extrémité de manchon (91).

3. Chaîne à maillons selon la revendication 1 et/ou 2,
**caractérisée en ce que**
ladite au moins une fente (89) présente une largeur libre qui correspond à l'épaisseur nominale du premier maillon de chaîne (77).

4. Chaîne à maillons selon l'une au moins des revendications 1 à 3,
**caractérisée en ce que**
le manchon de protection (79) s'étend sur toute la longueur de la partie de préhension (73) du gond (27).

5. Système d'antivol de cadre destiné à un deux-roues, comprenant :
un antivol de cadre présentant un verrou de fermeture (39) qui est mobile entre une position de fermeture pour bloquer une roue à rayons d'un deux-roues et une position de libération pour libérer une roue à rayons ; et
une chaîne à maillons (29) ;
l'antivol de cadre présentant en outre un logement à gond (25) pour recevoir l'extrémité libre (71) du gond (27) ;
**caractérisé en ce que**
la chaîne à maillons (29) est conçue selon l'une au moins des revendications 1 à 4.
